# EUROPÄISCHE PATENTANMELDUNG

(11) **EP 1 947 036 A1**
(43) Veröffentlichungstag der Anmeldung: **23.07.2008**
(21) Anmeldenummer: 07100830.4
(22) Anmeldetag: 19.01.2007
(51) Int. Cl.: B65G 47/14, B25J 9/16

(54) **Vereinzelungseinrichtung für Kleinteile und Verfahren zur Vereinzelung von Kleinteilen**

(71) Anmelder: Komax Holding AG, 6036 Dierikon (CH)
(72) Erfinder: Celoudoux, Jean Paul, 13100 Aix-en-Provence (FR); Soriano, Louis, 13400 Aubagne (FR)
(74) Vertreter: Gaussmann, Andreas

(57) **Zusammenfassung**

Bei dieser Vereinzelungseinrichtung (1) für als Schüttgut geeignete Kleinteile (2) werden die Kleinteile (2) in einen Bunker (3) geschüttet, der in Verbindung steht mit einem Behälter (4). Am Behälter (4) ist mindestens ein Aufstosselement (6) vorgesehen, das aufstossbar und rückziehbar ist. Beim Aufstossvorgang durchstösst das Aufstosselement (6) den Kleinteilvorrat (7) des Behälters (4) mit einer Linearbewegung von unten, wobei mindestens ein Kleinteil (2) auf einem Kopfstück (8) des Aufstosselementes (6) liegen bleibt. Eine Kamera (9) erkennt Form und Lage des auf dem Kopfstück (8) gelagerten Kleinteils (2) und weist einen Roboter (10) an, das erkannte Kleinteil (2) aufzunehmen.

## Beschreibung

Die Erfindung betrifft eine Vereinzelungseinrichtung und ein Verfahren zur Vereinzelung für als Schüttgut geeignete Kleinteile, die in einem Behälter auf Vorrat gehalten werden.

Aus der Schrift EP 0 916 457 A2 ist eine Einrichtung zur Vereinzelung von Kleinteilen bekannt geworden. In einem Behälter werden die Kleinteile auf Vorrat gehalten. Der mit einem Rüttler versehene Behälter übergibt die Kleinteile einer Dosierschleuse, die die Kleinteile breitwürfig auf eine Membrane streut. Eine übergeordnete Kamera erkennt die Orientierung der vereinzelten Kleinteile auf der Membrane und weist mit der Information einen Roboter an, die erkannten Kleinteile aufzunehmen. Unterhalb der Membrane ist ein Stössel mit Hammer angeordnet, der mit einem oder mehreren Schlägen von unten auf die Membrane Ansammlungen von Kleinteilen vereinzelt.

Die Erfindung, wie sie in Anspruch 1 gekennzeichnet ist, löst die Aufgabe, eine Einrichtung und ein Verfahren zu schaffen, mittels der bzw. dem als Schüttgut geeignete Kleinteile einfach aufnehmbar sind.

Vorteilhafte Weiterbildungen der Erfindung sind in den abhängigen Patentansprüchen angegeben.

Die durch die Erfindung erreichten Vorteile sind im wesentlichen darin zu sehen, dass die gebunkerten Kleinteile an einer vorherbestimmten und lagemässig immer gleichen Stelle zur Aufnahme bereit gestellt werden. Dadurch wird die Erkennung der Kleinteile vereinfacht und schneller. Ausserdem kann die Steuerung des die Kleinteile aufnehmenden Greifers oder Roboters einfacher ausgelegt werden. Die Aufnahme der Kleinteile kann auch während der Beschickung des Kleinteilbunkers ohne Unterbruch fortgeführt werden. Der Kleinteilbunker weist keine an der Bereitstellung der Kleinteile beteiligte, aktive Mechanik auf.

Die erfindungsgemässe Einrichtung ist einfach im Aufbau mit wenig Verschleissteilen, ruhig im Betrieb und billig in der Herstellung. Zudem ist sie ausbaubar in der Anzahl Aufnahmestellen. Je nach der Vielfalt, Gestalt und Grösse der zu verarbeitenden Kleinteile können eine, zwei, drei oder mehr Aufnahmestellen vorgesehen werden.

Gesamthaft ermöglicht die erfindungsgemässe Einrichtung eine effiziente, schnelle, zuverlässige und unterbruchsfreie Aufnahme und Weiterbearbeitung von Kleinteilen.

Als Schüttgut geeignete Kleinteile sind beispielsweise in Kugellagern verwendete Kugeln, scheibenförmige oder kapselförmige pharmazeutische Pillen zum Verpacken, medizinische Implantate zum Verpacken, elektrische Steckergehäuse zum Bestücken mit Kabelenden, elektronische Komponenten zum Bestücken einer gedruckten Schaltung, Farbstifte zum Verpacken oder Münzen zum Sortieren. In derselben Schüttung können auch unterschiedliche Kleinteile vorhanden sein, die dann mittels der erfindungsgemässen Einrichtung mechanisch sortierbar und optisch erkennbar sind.

Bei der erfindungsgemässen Vereinzelungseinrichtung und bei dem erfindungsgemässen Verfahren für als Schüttgut geeignete Kleinteile werden diese in einem Behälter auf Vorrat gehalten, wobei mindestens ein Aufstosselement vorgesehen ist, das aufstossbar und rückziehbar ist, wobei das Aufstosselement beim Aufstossvorgang den Vorrat des Behälters mit einer Bewegung von unten durchstösst, wobei mindestens ein Kleinteil auf einem Kopfstück des Aufstosselementes liegen bleibt.

Anhand der beiliegenden Figuren wird die vorliegende Erfindung näher erläutert.

Es zeigen:
Fig. 1
   eine Vereinzelungseinrichtung für Kleinteile,
Fig. 2
   einen Grundriss von zwei in einem Arbeitsbereich eines Roboters angeordneten Vereinzelungseinrichtungen,
Fig. 3
   ein Kopfstück mit mehreren Kleinteilen,
Fig. 4
   ein Verfahren zum Entfernen von überzähligen Kleinteilen,
Fig. 5
   Einzelheiten eines Aufstosselementes,
Fig. 6
   ein Kopfstück für zylinderförmige Kleinteile,
Fig. 7
   ein Kopfstück für kugelförmige Kleinteile,
Fig. 8
   ein Kopfstück mit Vakuumunterstützung für grosse plattenförmige Kleinteile,
Fig. 9
   ein Kopfstück mit Vakuumunterstützung für kleine plattenförmige Kleinteile und
Fig. 10
   Einzelheiten eines steckbaren Kopfstückes.

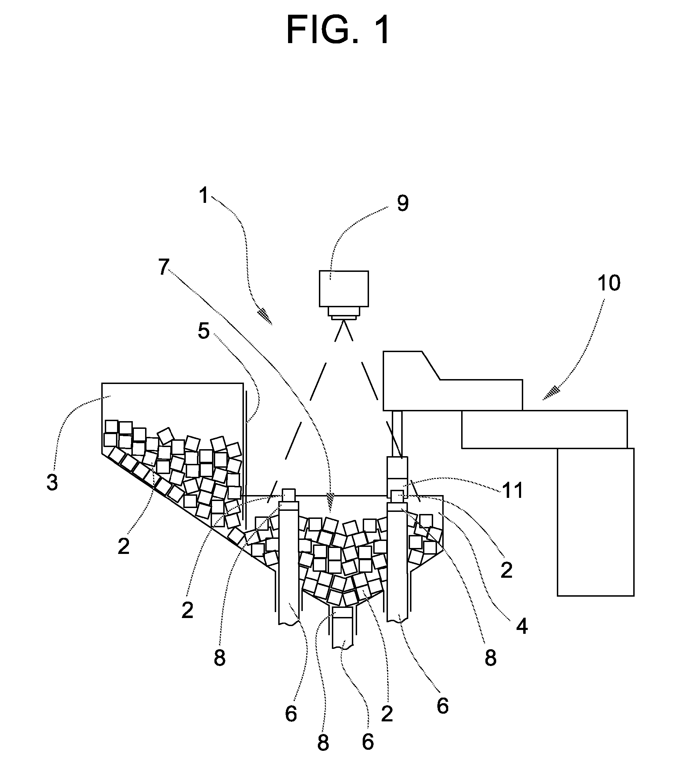

Fig. 1 zeigt eine Vereinzelungseinrichtung 1 für als Schüttgut geeignete Kleinteile 2. Die Kleinteile werden in einen Bunker 3 geschüttet, der in Verbindung steht mit einem Behälter 4. Eine am Bunker 3 angeordnete Blende 5 dosiert die Menge der in den Behälter 4 gelangenden Kleinteile 2 bzw. bestimmt das Niveau der Kleinteile 2 im Behälter 4. Am Behälter 4 ist mindestens ein Aufstosselement 6 als Aufnahmestelle für Kleinteile 2 vorgesehen, das aufstossbar und rückziehbar ist. Im gezeigten Beispiel sind fünf Aufstosselemente 6 vorgesehen. Das Aufstosselement 6 durchstösst beim Aufstossvorgang den Kleinteilvorrat 7 des Behälters 4 mit einer Bewegung von unten, wobei mindestens ein Kleinteil 2 auf einem Kopfstück 8 des Aufstosselementes 6 liegen bleibt. Sobald das Aufstosselement 6 die obere Endlage erreicht hat, ist das aus dem Kleinteilvorrat 7 nach oben geförderte Kleinteil 2 zum Abholen bereit. Eine Kamera 9 erkennt Form und Lage des auf dem Kopfstück 8 liegenden Kleinteils 2 und weist einen Roboter 10 an, das erkannte Kleinteil 2 aufzunehmen. Der Roboter 10 nimmt das vereinzelte Kleinteil 2 mittels Greifer 11 auf und bringt es zur Weiterbearbeitung oder zur Verpackung oder zur Sortierung einer im Arbeitsbereich des Roboters 10 angeordneten Einrichtung 12. Wenn die Kamera 9 erkennt, dass das Kopfstück 8 des Aufstosselements 6 ohne Kleinteil 2 ist, wird das Aufstosselement 6 in die untere Endlage bewegt und ist dann bereit für einen erneuten Aufstossvorgang. Je nach Bedarf an vereinzelten Kleinteilen 2 und der Anzahl aktiver Aufstosselemente 6 kann ein weiterer Aufstossvoragang gleich anschliessend erfolgen oder das Aufstosselement 6 kann in der unteren Endlage verweilen.

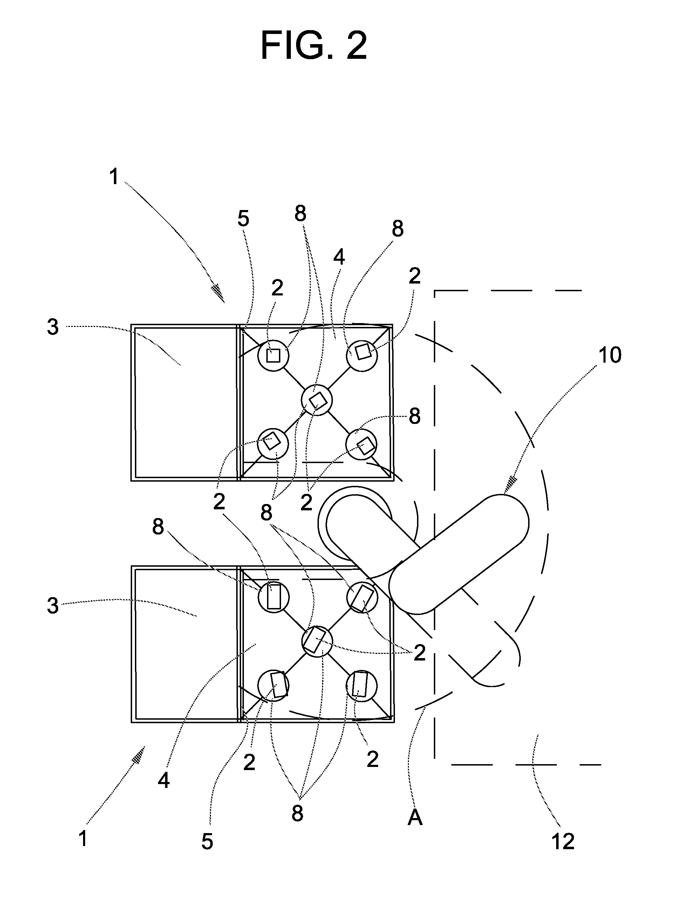

Fig. 2 zeigt einen Grundriss von zwei in einem Arbeitsbereich A eines Roboters 10 angeordneten Vereinzelungseinrichtungen 1. Der Roboter 10 ist zwischen den Vereinzelungseinrichtungen 1 angeordnet und bedient eine Einrichtung 12, beispielsweise eine Bearbeitungsstation zum Bestücken von Steckergehäusen mit an Kabelenden angeordneten Steckern. Der Behälter 4 einer Vereinzelungseinrichtung 1 weist fünf Aufstosselemente 6 auf, wobei im Behälter 4 der einen Vereinzelungseinrichtung 1 andere Kleinteile 2 vorrätig sein können als im Behälter 4 der anderen Vereinzelungseinrichtung 1. Es können auch Behälter 4 mit mehr oder weniger als fünf Aufstosselementen 6 vorgesehen sein. In Fig. 2 nicht dargestellt ist die Kamera 9 zur Erkennung der aufgestossenen, vereinzelten Kleinteile 2. Der Kleinteilvorrat 7 ist in Fig. 2 auch nicht dargestellt.

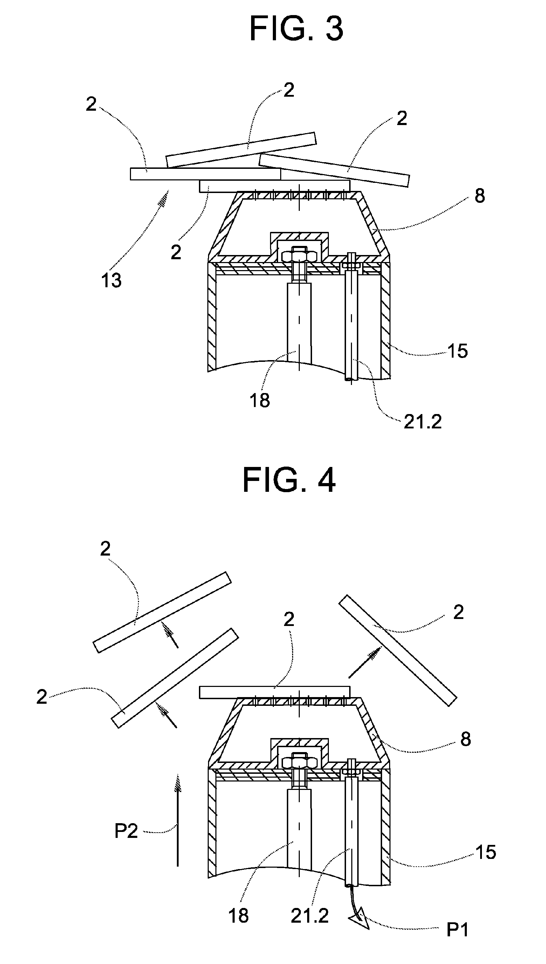

Fig. 3 zeigt ein Kopfstück 8 mit mehreren, plattenförmigen Kleinteilen 2, beispielsweise Münzen, die sich beim Aufstossvorgang als Stapel 13 geschichtet auf dem Kopfstück 8 halten konnten. Die Kamera 9 erkennt den Stapel 13 und schaltet das Aufstosselement 6, wie in Fig. 4 gezeigt, auf mit einem ersten Pfeil P1 symbolisiertes Vakuum. Das Vakuum P1 wird mittels einer am Kopfstück 8 angeschlossenen Leitung 21.2 zugeführt. Das auf dem Kopfstück 8 liegende Kleinteil 2 wird mittels des Vakuums P1 am Kopfstück 8 festgehalten. Dann wird das Aufstosselement 6 nach oben bewegt, wie mit einem zweiten Pfeil P2 symbolisiert, und ruckartig angehalten. Dabei werden die überzähligen Kleinteile 2 abgeworfen und fallen in den Behälter 4 zurück. Das Vakuum P1 kann auch bereits beim Aufstossvorgang eingeschaltet sein und die überzähligen Teile beim Anhalten des Aufstosselementes 6 in der oberen Endlage abgeworfen werden. Die überzähligen Kleinteile 2 können auch mit einem Luftstrahl weggeblasen werden.

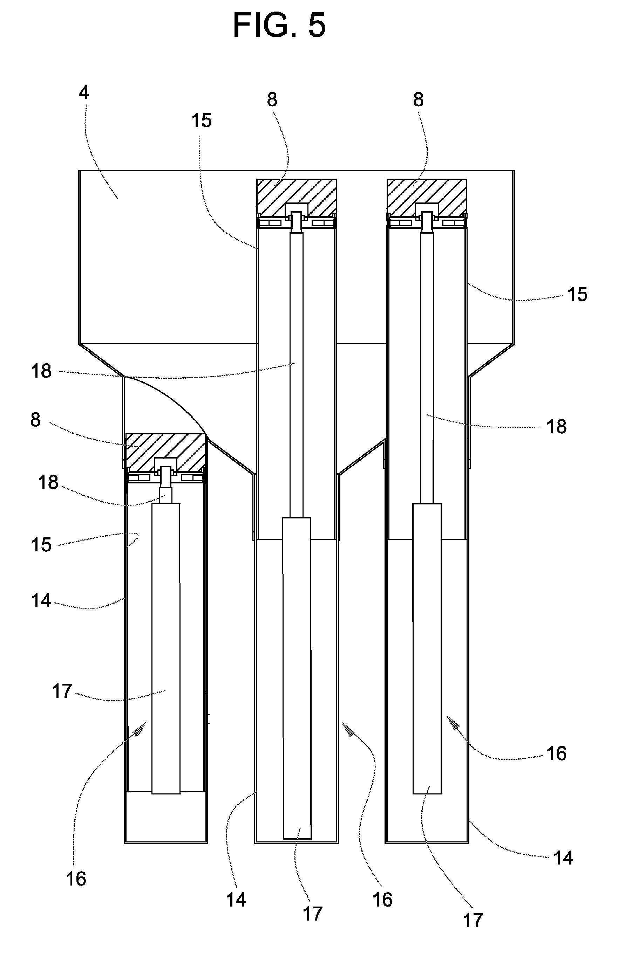

Fig. 5 zeigt Einzelheiten des am Behälter 4 angeordneten Aufstosselementes 6. Das Aufstosselement 6 besteht aus zwei teleskopierenden Rohren, einem ersten Rohr 14 und einem zweiten Rohr 15. Das erste Rohr 14 ist fest am Behälter 4 angeordnet und umschliesst und trägt beispielsweise einen Linearantrieb 16 mit Kopfstück 8. Das zweite Rohr 15 ist teleskopartig in das erste Rohr 14 einschiebbar. Im gezeigten Beispiel besteht der Linearantrieb 16 aus einem Pneumatikzylinder 17 mit Kolbenstange 18, die vom zweiten Rohr 15 umgeben ist. Andersartige Linearantriebe, wie beipielsweise ein motorgetriebenes, auf eine Zahnstange einwirkendes Ritzel, sind auch denkbar. In der Fig. 5 sind zwei Aufstosselemente 6 in der oberen Endlage und ein Aufstosselement 6 in der unteren Endlage gezeigt. Der Kleinteilvorrat 7 und die Kleinteile 2 auf den Kopfstücken 8 sind nicht dargestellt.

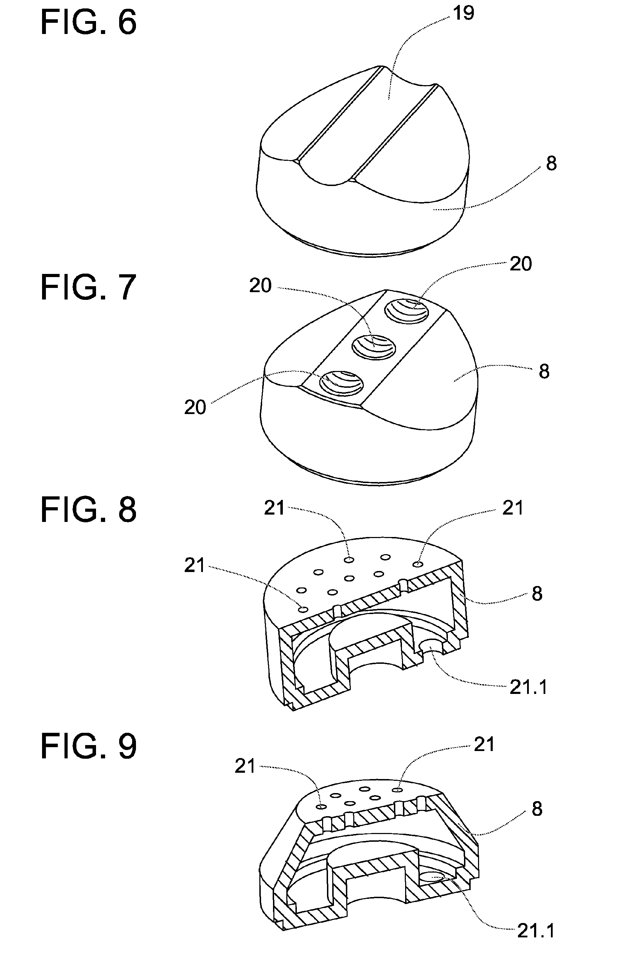

Fig. 6 bis Fig. 9 zeigen Kopfstücke 8 mit unterschiedlichen Konturen für in der Geometrie unterschiedliche Kleinteile 2.

Fig. 6 zeigt ein Kopfstück 8 zur Vereinzelung von zylinderförmigen Kleinteile, wie beispielsweise pharmazeutische Kapselpillen. Beim Aufstossvorgang bleibt ein Kleinteil 2 in einer Rinne 19 des Kopfstückes 8 liegen.

Fig. 7 zeigt ein Kopfstück 8 zur Vereinzelung von kugelförmigen Kleinteilen 2, wie beispielsweise Kugeln für Kugellager. Beim Aufstossvorgang bleibt je kalottenförmige Vertiefung 20 des Kopfstückes 8 eine Kugel liegen.

Fig. 8 zeigt ein Kopfstück 8 mit Vakuumunterstützung zur Vereinzelung von mittleren bis grossen plattenförmigen Kleinteilen 2, wie beispielsweise Steckergehäuse oder grosse Münzen. Beim Aufstossvorgang bleibt ein Kleinteil 2 auf dem Kopfstück 8 liegen. Das auf dem Kopfstück 8 liegende Kleinteil 2 kann mittels durch erste Bohrungen 21 des Kopfstückes 8 wirkendes Vakuums am Kopfstück 8 festgehalten werden. Das Vakuum P1 wird über die an einer Öffnung 21.1 angeschlossene Leitung 21.2 dem als geschlossener Hohlkörper ausgebildeten Kopfstück 8 zugeführt. Überzählige Kleinteile 2 werden durch eine ruckartige Bewegung abgeworfen oder mittels Luftstrahl weggeblasen. Anstelle des Vakuums P1 kann dem Kopfstück 8 über die Leitung 21.2 auch Druckluft zugeführt werden beispielsweise zum Wegblasen des auf dem Kopfstück 8 liegenden Kleinteils 2 und der überzähligen Kleinteile 2.

Fig. 9 zeigt ein Kopfstück 8 mit Vakuumunterstützung zur Vereinzelung von kleinen plattenförmigen oder scheibenförmigen Kleinteilen 2, wie beispielsweise scheibenförmigen Pillen oder kleinen Münzen oder Unterlagscheiben. Beim Aufstossvorgang bleibt ein Kleinteil 2 auf dem Kopfstück 8 liegen. Das auf dem Kopfstück 8 liegende Kleinteil 2 kann mittels durch erste Bohrungen 21 des Kopfstückes 8 wirkendes Vakuums am Kopfstück 8 festgehalten werden. Das Vakuum P1 wird über die an der Öffnung 21.1 angeschlossene Leitung 21.2 dem als geschlossener Hohlkörper ausgebildeten Kopfstück 8 zugeführt. Überzählige Kleinteile 2 werden durch eine ruckartige Bewegung abgeworfen oder mittels Luftstrahl weggeblasen. Anstelle des Vakuums P1 kann dem Kopfstück 8 über die Leitung 21.2 auch Druckluft zugeführt werden beispielsweise zum Wegblasen des auf dem Kopfstück 8 liegenden Kleinteils 2 und der überzähligen Kleinteile 2.

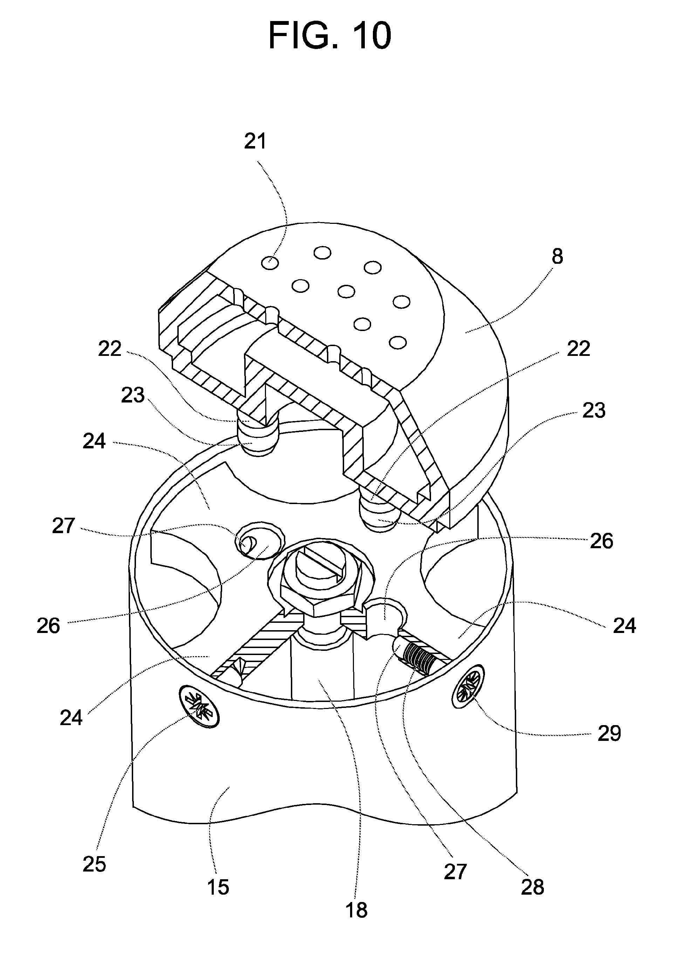

Fig. 10 zeigt Einzelheiten eines steckbaren Kopfstückes 8. Am Kopfstück 8 sind mindestens zwei Zapfen 22 angeordnet. Jeder Zapfen ist mit einem Einstich 23 versehen. Das Ende der Kolbenstange 18 ist verbunden mit einer Platte 24, die wiederum mit dem zweiten Rohr 15 mittels ersten Schrauben 25 verbunden ist. Das aufgesteckte Kopfstück 8 schliesst das zweite Rohr 15 nach oben ab. In der Platte 24 sind zweite Bohrungen 26 vorgesehen, in die Druckstücke 27 bzw. Schnäpper ragen. Die Zapfen 22 der Kopfstücke 8 passen in die zweiten Bohrungen 26, wobei die Druckstücke 27 mit den Einstichen 23 verrasten. Das Druckstück 27 wird mittels einer Feder 28 vorgespannt, die sich an einer zweiten Schraube 29 abstützt.

## Patentansprüche

1. Vereinzelungseinrichtung (1) für als Schüttgut geeignete Kleinteile (2), die in einem Behälter (4) auf Vorrat (7) gehalten werden,
**dadurch gekennzeichnet,**
**dass** mindestens ein Aufstosselement (6) vorgesehen ist, das aufstossbar und rückziehbar ist, wobei das Aufstosselement (6) beim Aufstossvorgang den Vorrat (7) des Behälters (4) mit einer Bewegung von unten durchstösst, wobei mindestens ein Kleinteil (2) auf einem Kopfstück (8) des Aufstosselementes (6) liegen bleibt.

2. Vereinzelungseinrichtung nach Anspruch 1,
**dadurch gekennzeichnet,**
**dass** eine Kamera (9) vorgesehen ist, die Form und Lage des auf dem Kopfstück (8) gelagerten Kleinteils (2) erkennt und einen Roboter (10) anweist, das erkannte Kleinteil (2) aufzunehmen.

3. Vereinzelungseinrichtung nach einem der Ansprüche 1 oder 2,
**dadurch gekennzeichnet,**
**dass** das Aufstosselement (6) aus mittels eines Linearantriebs (16) bewegbaren und teleskopierbaren Rohren (14,15) besteht, wobei ein oberes Rohr (15) mittels des Kopfstückes (8) abschliessbar ist.

4. Vereinzelungseinrichtung nach einem der vorhergehenden Ansprüche,
**dadurch gekennzeichnet,**
**dass** das Kopfstück (8) unterschiedliche Konturen für in der Geometrie unterschiedliche Kleinteile (2) aufweist.

5. Vereinzelungseinrichtung nach Anspruch 4,
**dadurch gekennzeichnet,**
**dass** das Kopfstück (8) eine Vakuumunterstützung zur Vereinzelung der Kleinteile (2) aufweist.

6. Vereinzelungseinrichtung nach einem der Ansprüche 4 oder 5,
**dadurch gekennzeichnet,**
**dass** das Kopfstück (8) steckbar ist.

7. Vereinzelungseinrichtung nach Anspruch 6,
**dadurch gekennzeichnet,**
**dass** das Kopfstück (8) Zapfen (22) aufweist, die in Bohrungen (26) einer im oberen Rohr (15) angeordneten Platte (24) passen und mittels Druckstücken (27) verrastbar sind.

8. Verfahren zur Vereinzelung von als Schüttgut geeigneten Kleinteilen (2), die in einem Behälter (4) auf Vorrat (7) gehalten werden,
**dadurch gekennzeichnet,**
**dass** mindestens ein aufstossbares und rückziehbares Aufstosselement (6) den Vorrat (7) des Behälters (4) mit einer Bewegung von unten durchstösst, wobei mindestens ein Kleinteil (2) auf einem Kopfstück (8) des Aufstosselementes (6) liegen bleibt.

9. Verfahren nach Anspruch 8,
**dadurch gekennzeichnet,**
**dass** die Kleinteile (2) in einen Bunker (3) geschüttet werden, der die Kleinteile (2) an den Behälter (4) abgibt.

10. Verfahren nach Anspruch 9,
**dadurch gekennzeichnet,**
**dass** eine Blende (5) des Bunkers (3) die Menge der Kleinteile (2) im Behälter (4) dosiert.
